# EUROPÄISCHE PATENTSCHRIFT

(11) **EP 3 428 393 B1**
(45) Veröffentlichungstag und Bekanntmachung des Hinweises auf die Patenterteilung: **12.10.2022**
(21) Anmeldenummer: 18181147.2
(22) Anmeldetag: 02.07.2018
(51) Int. Cl.: F01D 5/14, F04D 29/32, F04D 29/66

(54) **LAUFRAD EINER STRÖMUNGSMASCHINE**
ROTOR OF A TURBOMACHINE
ROUE AUBAGÉE D'UNE TURBOMACHINE

(30) Priorität: 14.07.2017 DE 102017115853
(43) Veröffentlichungstag der Anmeldung: 16.01.2019
(73) Patentinhaber: Rolls-Royce Deutschland Ltd & Co KG, 15827 Blankenfelde-Mahlow (DE); Rolls-Royce plc, London N1 9FX (GB)
(72) Erfinder: Opoka, Maciej, 12103 Berlin (DE); Giersch, Thomas, 15711 Königs Wusterhausen (DE); Mueck, Bernhard, 12305 Berlin (DE); Dodds, John, Derby, DE74 2JZ (GB); Hall, Chris, Derby, DE74 2JZ (GB)
(74) Vertreter: Müller, Wolfram Hubertus

(56) Entgegenhaltungen:
- EP-A1- 3 075 955
- EP-A2- 1 211 383
- EP-A2- 1 813 773
- DE-A1-102011 054 589
- US-A1- 2010 247 310

## Beschreibung

Die Erfindung betrifft ein Laufrad einer Strömungsmaschine gemäß dem Oberbegriff des Patentanspruchs 1.

Es ist bekannt, Laufräder von Strömungsmaschinen aktiv zu verstimmen, d.h. den Laufschaufeln zusätzlich zu fertigungsbedingten und damit zufälligen Abweichungen der Schaufeleigenfrequenzen gezielte Abweichungen der Schaufeleigenfrequenzen aufzuprägen. Beispielsweise ist es zur Realisierung einer gezielten Verstimmung bei einem Laufrad mit einer geraden Anzahl von Laufschaufeln aus der EP 1 211 383 A2 bekannt, alternierend Materialaussparungen an der Schaufelspitze und im Bereich der Vorderkante der einzelnen Laufschaufeln auszubilden. Durch die gezielte Verstimmung eines Laufrads werden bestimmte Schwingungsanregungen des Laufrads reduziert.

Aus der EP 3 075 955 A1 ist ein gattungsgemäßes Laufrad einer Strömungsmaschine bekannt, wobei eine Teilmenge der Laufschaufeln des Laufrads im Übergang von der Schaufelvorderkante zur Schaufelspitze eine Materialaussparung aufweist.

Aus der US 2010/0247310 A1 ist es bekannt, die Profildicke der Schaufeln eines Schaufelrads zu variieren.

Der vorliegenden Erfindung liegt die Aufgabe zugrunde, ein Laufrad bereitzustellen, das in nur geringem Maße für Schwingungsanregungen anfällig ist.

Diese Aufgabe wird durch ein Laufrad mit den Merkmalen des Patentanspruchs 1 gelöst. Ausgestaltungen der Erfindung sind in den Unteransprüchen angegeben.

Danach betrachtet die Erfindung ein Laufrad, das im Bereich seiner Schaufelspitzen in nichtperiodischer Weise verstimmt ist. Dabei bilden die Laufschaufeln mindestens zwei Gruppen von Laufschaufeln, die baulich unterschiedlich sind bzw. eine unterschiedliche Geometrie aufweisen. Die Laufschaufeln einer Gruppe sind dabei - abgesehen von Fertigungstoleranzen - baulich identisch. Die baulich unterschiedliche Gestaltung der Laufschaufeln führt dazu, dass sich die Laufschaufeln der unterschiedlichen Gruppen im Hinblick auf die Lage mindestens einer ihrer Eigenfrequenzen unterscheiden.

Die Erfindung sieht vor, dass die Laufschaufeln einer ersten Gruppe nominale Laufschaufeln sind und die Laufschaufeln mindestens einen weiteren Gruppe jeweils eine Materialaussparung im Übergang von der Schaufelvorderkante zur Schaufelspitze aufweisen, die bei den Laufschaufeln der ersten Gruppe nicht vorhanden ist. Des Weiteren ist vorgesehen, dass die Lauschaufeln (also die Laufschaufeln der ersten Gruppe und der mindestens einen weiteren Gruppe) in Umfangsrichtung eine nichtperiodische Abfolge bilden.

Die Erfindung beruht auf der Erkenntnis, dass eine Schaufelanregung dadurch unterdrückt werden kann, dass Laufschaufeln unterschiedlicher Gruppen bzw. mit unterschiedlichen Eigenfrequenzen in nichtperiodischer Weise in Umfangsrichtung des Laufrads angeordnet werden. Durch eine nichtperiodisch wechselnde Verteilung unterschiedlicher Schaufelspitzen, deren Unterschiedlichkeit sich daraus ergibt, dass die Laufschaufeln mindestens einer Gruppe eine Materialaussparung im Übergang von der Schaufelvorderkante zur Schaufelspitze aufweisen, erlaubt es die Erfindung, die Frequenzverstimmung des Laufrads in der Weise zu optimieren, dass eine maximale aerodynamische Dämpfung erreicht werden kann.

Insbesondere vermeidet oder reduziert die Erfindung das klassische Flattern, sowie das Abreißflattern ("stall flutter"). Beim Abreißflattern bilden sich an den Schaufelspitzen der Laufschaufeln instabile lokale Zellen, in denen die Strömung lokal abreißt. Diese Zellen können im rotierenden Bezugssystem in Umfangsrichtung entgegen dem Drehsinn des Schaufelrads wandern. Dies ist zu vermeiden, da ein solches Phänomen zu unerwünschten Resonanzen der fundamentalen Schaufelmoden führen kann. Die durch die Erfindung bereitgestellte nichtperiodische aerodynamische Variation beeinflusst die Charakteristik der lokal einsetzenden Strömungsablösung an den jeweiligen Schaufelspitzen. So unterscheidet sich die Strömungsablösung bei kritischer Anströmung in ihrer Frequenz und radialen Ausdehnung. Diese aerodynamische Variation in Umfangsrichtung verhindert, dass sich rotierende kohärente Abrissmuster ausbilden, die im Stande sind, die fundamentalen Schaufelmoden zum Schwingen anzuregen. Die unterschiedlich ausgeformten Vorderkanten erlauben es dabei, die Leistung der Rotorstufe ausgedrückt durch Totaldruckanstieg und Wirkungsgrad auf einem hohen Niveau zu halten. Die erfindungsgemäße Lösung unterdrückt somit die Ausbildung von kohärenten Ablösevorgängen an der Blattspitze und maximiert gleichzeitig durch die Frequenz-Verstimmung der Gesamtstruktur die aerodynamische Dämpfung.

Die erfindungsgemäße Lösung erreicht dabei, dass die Ausbildung rotierender kohärenter Abrissmuster über den gesamten Betriebsbereich des Verdichters, in dem das erfindungsgemäß ausgebildete Laufrad ausgebildet ist, verhindert werden kann, insbesondere auch im Teillastbetrieb.

Nichtperiodizität im Sinne der vorliegenden Erfindung bedeutet insbesondere, dass die Laufschaufeln der vorhandenen Gruppen nicht ausschließlich alternierend angeordnet sind, gemäß dem Muster ABAB... bei zwei Gruppen von Laufschaufeln, gemäß dem Muster ABCABC... bei drei Gruppen von Laufschaufeln, gemäß dem Muster ABCDABCD... bei vier Gruppen von Laufschaufeln, usw. Laufräder mit einer ungeraden Anzahl von Laufschaufeln sind dabei immer nichtperiodisch, wenn sie Laufschaufeln von mehr als einer Gruppe umfassen.

Es wird darauf hingewiesen, dass der Begriff "Materialaussparung" sich in vergleichender Weise auf eine Laufschaufel bezieht, bei der eine solche Materialaussparung nicht vorhanden ist. Von den mindestens zwei Gruppen von Laufschaufeln stellt die eine (erste) Gruppe eine solche Referenz dar. Wenn eine Gruppe von Laufschaufeln somit Laufschaufeln mit Materialaussparungen aufweist, so unterscheiden sich die Laufschaufeln dieser Gruppe von den Laufschaufeln der ersten Gruppe dadurch, dass sie Materialaussparungen dort realisieren, wo die Laufschaufeln der ersten Gruppe Material aufweisen. Die Laufschaufeln der ersten Gruppe werden als nominale Laufschaufeln bezeichnet. Eine Laufschaufel mit Materialaussparung ist im Vergleich zu einer Laufschaufel der ersten Gruppe, die als Referenzschaufel dient, im Bereich der Materialaussparung gegenüber der Referenzschaufel zurückgeschnitten und somit in Außenumfang bzw. Kontur verändert und im Material reduziert.

Die Materialaussparung im Übergang von der Schaufelvorderkante zur Schaufelspitze, die die Laufschaufeln mindestens einer Gruppe ausbilden, kann auch als Rückschnitt an den Vorderkanten der Blattspitzen der Laufschaufeln bezeichnet werden. Dabei verhält es sich so, dass, je größer die Materialaussparung bzw. der Rückschnitt ist, desto größer auch der Spalt ist zwischen der äußeren Begrenzung des Ringraums, in dem das Laufrad rotiert, und der Vorderkante der Laufschaufeln. Dementsprechend verkürzt sich die Länge der Profilsehne der Laufschaufel im Bereich einer Materialaussparung bzw. eines Rückschnitts mit zunehmendem Radius.

Es wird weiter darauf hingewiesen, dass eine Gruppe von Laufschaufeln eine oder mehrere Laufschaufeln aufweisen kann. Auch nur eine baulich unterschiedliche Laufschaufel mit mindestens einer Eigenfrequenz, die von den Eigenfrequenzen der anderen Laufschaufeln des Laufrads abweicht, bildet somit eine Gruppe von Laufschaufeln im Sinne der vorliegenden Erfindung.

Gemäß einer Ausgestaltung der Erfindung unterscheidet sich eine Laufschaufel mit Materialaussparung von einer nominalen Laufschaufel nur hinsichtlich der Materialaussparung, d.h. die Laufschaufeln sind bis auf die Materialaussparung (und abgesehen von Fertigungstoleranzen) baugleich. Dies ist aber nicht notwendigerweise der Fall.

Eine Ausgestaltung der Erfindung sieht vor, dass die Laufschaufeln zwei Gruppen bilden, die baulich unterschiedlich sind, wobei die Laufschaufeln der ersten Gruppe nominale Laufschaufeln sind, die keine Materialaussparungen im Übergang von der Schaufelvorderkante zur Schaufelspitze aufweisen, und die Laufschaufeln der zweiten Gruppe Laufschaufeln sind, die Materialaussparungen im Übergang von der Schaufelvorderkante zur Schaufelspitze aufweisen. Mit Laufschaufeln zweier Gruppen lassen sich beispielsweise nichtperiodische Strukturen der Form ABABABB oder ABABABBA realisieren, wobei A Schaufeln der ersten Gruppe und B Schaufeln der zweiten Gruppe bezeichnet.

Eine weitere Ausgestaltung der Erfindung sieht vor, dass die Laufschaufeln n Gruppen bilden, n ≥ 3, die baulich unterschiedlich sind, wobei die Laufschaufeln der ersten Gruppe nominale Laufschaufeln sind, die keine Materialaussparungen im Übergang von der Schaufelvorderkante zur Schaufelspitze aufweisen, und die Laufschaufeln jeder weiteren Gruppe Laufschaufeln sind, die Materialaussparungen im Übergang von der Schaufelvorderkante zur Schaufelspitze aufweisen, wobei Form und/oder Ausmaß der Materialaussparung der Laufschaufeln bei jeder der weiteren Gruppen unterschiedlich ist. Für den Fall n = 3 lassen sich beispielsweise nichtperiodische Strukturen der Form ACBBACB, ABCABCB, ABABABAC oder ABCABCAC realisieren, wobei A Schaufeln der ersten Gruppe, B Schaufeln der zweiten Gruppe und C Schaufeln der dritten Gruppe bezeichnet.

Gemäß einer Ausführungsvariante unterscheiden sich die Gruppen von Laufschaufeln mit Materialaussparungen dadurch, dass die jeweiligen Laufschaufeln bezogen auf die radiale Richtung der Laufschaufeln einen unterschiedlich steilen Verlauf der Vorderkante im Bereich der Materialaussparung aufweisen. Der Rückschnitt, der durch die Materialaussparungen bereitgestellt wird, verläuft somit unterschiedlich steil.

Dabei kann gemäß einem Ausführungsbeispiel vorgesehen sein, dass die Laufschaufeln drei Gruppen bilden, die baulich unterschiedlich sind, wobei die Laufschaufeln der ersten Gruppe nominale Laufschaufeln sind, die keine Materialaussparungen im Übergang von der Schaufelvorderkante zur Schaufelspitze aufweisen und die Laufschaufeln der zweiten und dritten Gruppe Laufschaufeln sind, die Materialaussparungen im Übergang von der Schaufelvorderkante zur Schaufelspitze aufweisen. Dabei weisen die Materialaussparungen bei den Laufschaufeln der zweiten Gruppe bezogen auf die radiale Richtung einen steileren Verlauf der Vorderkante auf als die Laufschaufeln der dritten Gruppe.

Die Materialaussparungen weisen gemäß einer Ausführungsvariante zumindest näherungsweise in der Seitenansicht die Form eines Dreiecks auf, wobei die längste Seite des Dreiecks die Vorderkante der Schaufel im Bereich der Materialaussparung bildet.

Gemäß der Erfindung ist weiter vorgesehen, dass die Laufschaufeln sich zusätzlich zu den Materialaussparungen, die sie teilweise ausbilden, im Hinblick auf die Form (das Profil) der Vorderkante im Bereich der Materialaussparung unterscheiden. So ist vorgesehen, dass bei mindestens einer Gruppe von Laufschaufeln mit Materialaussparungen die Form der Vorderkante im Bereich der Materialaussparung abweicht von der Form der Vorderkante außerhalb der Materialaussparung, also die Vorderkantenprofile voneinander abweichen.

Die Formgebung der Vorderkante wird dabei in einer Ausführungsvariante derart mit den Materialaussparungen kombiniert, dass bei zwei betrachteten Gruppen von Laufschaufeln mit Materialaussparungen bei der Gruppe, die eine geringere Steilheit des Verlaufs der Vorderkante im Bereich der Materialaussparung aufweist, eine flachere Vorderkantenform ausgebildet ist. Mit anderen Worten, je größer die Steilheit des Verlaufs der Vorderkante (d.h. je stärker der Vorderkantenverlauf demjenigen der nominalen Laufschaufel entspricht), desto weniger erfolgt eine zusätzliche Abflachung der Vorderkante.

Die Vorderkantenform, die die Vorderkante im Bereich der Materialaussparung aufweist, kann unterschiedliche Ausgestaltungen aufweisen. Gemäß einem nicht beanspruchten Beispiel ist die Vorderkante im Bereich der Materialaussparung halbkreisförmig ausgebildet, während sie im Bereich außerhalb der Materialaussparung elliptisch ausgebildet ist. Gemäß einem zweiten nicht beanspruchten Beispiel ist die Vorderkante im Bereich der Materialaussparung stumpf ausgebildet, während sie im Bereich außerhalb der Materialaussparung elliptisch ausgebildet ist. Erfindungsgemäß ist die Vorderkante im Bereich der Materialaussparung und im Bereich außerhalb der Materialaussparung elliptisch ausgebildet ist, wobei das Verhältnis von Hauptachse zu Nebenachse im Bereich der Materialaussparung größer ist als im Bereich außerhalb der Materialaussparung, so dass die elliptische Form im Bereich der Materialaussparung stärker abgeflacht ist.

Des Weiteren kann vorgesehen sein, dass bei mindestens einer Gruppe von Laufschaufeln mit Materialaussparungen die Vorderkantenform im Bereich der Materialaussparung mit abnehmender Länge der Profilsehne des Schaufelprofils (also zur Schaufelspitze hin) zunehmend flacher wird. Dieser Erfindungsaspekt betrachtet somit eine Variation der Form der Vorderkante innerhalb einer Laufschaufel, und nicht bezogen auf die Laufschaufeln unterschiedlicher Gruppen.

Die vorliegende Erfindung betrachtet grundsätzlich beliebige Umfangsverteilungen der Laufschaufeln, solange die Laufschaufeln der mindestens zwei Gruppen in Umfangsrichtung nichtperiodisch angeordnet sind. Dabei kann vorgesehen sein, dass das Laufrad eine ungerade Anzahl von Schaufeln aufweist oder dass das Laufrad eine gerade Anzahl von Schaufeln aufweist. In beiden Fällen lässt sich auf vielfältige Weise eine nichtperiodische Abfolge der Schaufeln der mindestens zwei Gruppen realisieren. So sieht eine Ausgestaltung der Erfindung vor, dass das Laufrad eine ungerade Anzahl von Schaufeln aufweist, wobei die nichtperiodische Abfolge der Laufschaufeln der mindestens zwei Gruppen durch eine quasiperiodische Abfolge gebildet wird, die bis auf einen Symmetriebruch periodisch ist. Eine fehlende Symmetrie liegt somit nur im Bereich des Symmetriebruchs vor, während die Abfolge der Laufschaufeln ansonsten periodisch ist. Dabei kann, wenn das Laufrad zwei Gruppen von Laufschaufeln und dabei eine ungerade Anzahl von Schaufeln aufweist, ein Symmetriebruch beispielsweise dadurch gebildet werden, dass zwei Schaufeln einer Gruppe zumindest einmal unmittelbar aufeinanderfolgen. Ein Beispiel hierfür ist die Schaufelabfolge ABABABB, wobei A Schaufeln der ersten Gruppe und B Schaufeln der zweiten Gruppe bezeichnet.

Eine weitere Ausgestaltung der Erfindung sieht vor, dass das Laufrad zwei Gruppen von Laufschaufeln und eine gerade Anzahl von Schaufeln aufweist, wobei die nichtperiodische Abfolge der Laufschaufeln der zwei Gruppen durch mindestens eine Abweichung von einer alternierenden Reihenfolge gebildet wird. Ein Beispiel hierfür ist die Schaufelabfolge ABABABBA, wobei A Schaufeln der ersten Gruppe und B Schaufeln der zweiten Gruppe bezeichnet.

Die erfindungsgemäße Verstimmung eines Laufrads ist insbesondere von Vorteil bei Laufrädern, die eine nur geringe Dämpfung im Übergang zwischen Schaufel und Rotornabe aufweisen. Eine geringe Dämpfung im Übergang zwischen Schaufel und Rotornabe liegt insbesondere dann vor, wenn das Laufrad in BLISK-Bauweise ausgeführt ist, für welchen Fall die Rotorscheibe, die Rotornabe und die Laufschaufeln integral (einstückig) ausgebildet sind (BLISK = "Blade Integrated Disk"), oder wenn das Laufrad in BLING-Bauweise ausgeführt ist, für welchen Fall die Rotornabe und die Laufschaufeln integral (einstückig) ausgebildet sind (BLING = "Blade Integrated Ring").

Dementsprechend ist in Ausgestaltungen der Erfindung vorgesehen, dass das Laufrad in BLISK-Bauweise oder in BLING-Bauweise ausgebildet ist, wobei im Rahmen dieser Beschreibung der Einfachheit halber beide diese Varianten als "BLISK-Bauweise" bezeichnet werden. In BLISK-Bauweise ausgebildete Laufräder sind empfindlicher als herkömmliche Laufräder für eine Schwingungsanregung.

Gemäß einer Ausgestaltung der Erfindung handelt sich bei dem betrachteten Laufrad um einen Fan, beispielsweise den Fan eines Turbofan-Triebwerks. Gemäß einer weiteren Ausgestaltung handelt es sich bei dem betrachteten Laufrad um ein in BLISK-Bauweise ausgebildetes Laufrad einer Verdichtereingangsstufe eines Verdichters, beispielsweise eines Hochdruckverdichters oder eines Mitteldruckverdichters.

Bei der Strömungsmaschine, in der das mit einem erfindungsgemäßen Verstimmungsmuster versehene Laufrad eingesetzt wird, handelt es sich beispielsweise um eine Gasturbine, insbesondere ein Flugtriebwerk, beispielsweise ein Turbofan-Triebwerk.

Das Laufrad gemäß Anspruch 1 kann in einem Turbofan-Triebwerk angeordnet sein.

Es wird darauf hingewiesen, dass die vorliegende Erfindung bezogen auf ein zylindrisches Koordinatensystem beschrieben ist, das die Koordinaten x, r und ϕ aufweist. Dabei gibt x die axiale Richtung, r die radiale Richtung und ϕ den Winkel in Umfangsrichtung an. Die axiale Richtung ist dabei identisch mit der Maschinenachse des Turbofan-Triebwerks bzw. des Strömungsmaschine, in der die Erfindung realisiert ist. Die Erfindung wird nachfolgend unter Bezugnahme auf die Figuren der Zeichnung anhand mehrerer Ausführungsbeispiele näher erläutert. Es zeigen:
- Figur 1: eine vereinfachte schematische Schnittdarstellung eines Turbofantriebwerks, in dem die vorliegende Erfindung realisierbar ist;
- Figur 2: ein Ausführungsbeispiel eines Laufrads eines Verdichters, das eine nichtperiodische Verstimmung aufweist;
- Figur 3: eine im Übergang von der Schaufelvorderkante zur Schaufelspitze mit einer Materialaussparung versehene Laufschaufel des Laufrads der Figur 1;
- Figur 4: schematisch drei Ausführungsbeispiele für die Formgebung einer Laufschaufel im Übergang von der Schaufelvorderkante zur Schaufelspitze;
- Figur 5: schematisch drei Beispiele für die Form der Vorderkante einer Laufschaufel im Bereich einer Materialaussparung;
- Figur 6: ein Diagramm, das für jede Laufschaufel eines Laufrads mit einer ungeraden Anzahl von Laufschaufeln eine Verstimmung der Laufschaufeln angibt, wobei die Laufschaufel insgesamt vierzehn verschiedene Schaufelvarianten bzw. Verstimmungsmuster ausbildet; und
- Figur 7: ein Diagramm, das für jede Laufschaufel eines Laufrads mit einer geraden Anzahl von Laufschaufeln eine Verstimmung der Laufschaufeln angibt, wobei die Laufschaufel insgesamt vierzehn verschiedene Schaufelvarianten bzw. Verstimmungsmuster ausbildet.

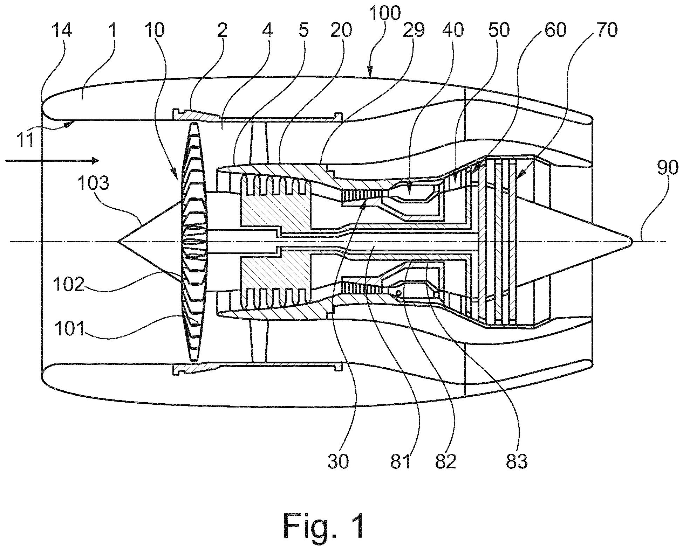

Die Figur 1 zeigt schematisch ein Turbofantriebwerk 100, das eine Fanstufe mit einem Fan 10 als Niederdruckverdichter, einen Mitteldruckverdichter 20, einen Hochdruckverdichter 30, eine Brennkammer 40, eine Hochdruckturbine 50, eine Mitteldruckturbine 60 und eine Niederdruckturbine 70 aufweist.

Der Mitteldruckverdichter 20 und der Hochdruckverdichter 30 weisen jeweils eine Mehrzahl von Verdichterstufen auf, die jeweils einen Rotor und einen Stator umfassen. Das Turbofantriebwerk 100 der Figur 1 weist des Weiteren drei separate Wellen auf, eine Niederdruckwelle 81, die die Niederdruckturbine 70 mit dem Fan 10 verbindet, eine Mitteldruckwelle 82, die die Mitteldruckturbine 60 mit dem Mitteldruckverdichter 20 verbindet und eine Hochdruckwelle 83, die die Hochdruckturbine 50 mit dem Hochdruckverdichter 30 verbindet. Dies ist jedoch lediglich beispielhaft zu verstehen. Wenn das Turbofantriebwerk beispielsweise keinen Mitteldruckverdichter und keine Mitteldruckturbine besitzt, wären nur eine Niederdruckwelle und eine Hochdruckwelle vorhanden.

Das Turbofantriebwerk 100 weist eine Triebwerksgondel 1 auf (auch als Triebwerksverkleidung bezeichnet), die eine Einlauflippe 14 umfasst und innenseitig einen Triebwerkseinlauf 11 ausbildet, der einströmende Luft dem Fan 10 zuführt. Der Fan 10 weist eine Mehrzahl von Fan-Schaufeln 101 auf, die mit einer Fan-Scheibe 102 verbunden sind. Der Annulus der Fan-Scheibe 102 bildet dabei die radial innere Begrenzung des Strömungspfads durch den Fan 10. Radial außen wird der Strömungspfad durch ein Fangehäuse 2 begrenzt. Stromaufwärts der Fan-Scheibe 102 ist ein Nasenkonus 103 angeordnet.

Hinter dem Fan 10 bildet das Turbofantriebwerk 100 einen Sekundärstromkanal 4 und einen Primärstromkanal 5 aus. Der Primärstromkanal 5 führt durch das Kerntriebwerk (Gasturbine), das den Mitteldruckverdichter 20, den Hochdruckverdichter 30, die Brennkammer 40, die Hochdruckturbine 50, die Mitteldruckturbine 60 und die Niederdruckturbine 70 umfasst. Dabei sind der Mitteldruckverdichter 20 und der Hochdruckverdichter 30 von einem Umfangsgehäuse 29 umgeben, dass innenseitig eine Ringraumfläche bildet, die den Primärstromkanal 5 radial außen begrenzt. Radial innen ist der Primärstromkanal 5 durch entsprechende Kranzoberflächen der Rotoren und Statoren der jeweiligen Verdichterstufen bzw. durch die Nabe oder mit der Nabe verbundene Elemente der entsprechenden Antriebswelle begrenzt.

Im Betrieb des Turbofantriebwerks 100 durchströmt ein Primärstrom den Primärstromkanal 5, der auch als Hauptströmungskanal bezeichnet wird. Der Sekundärstromkanal 4, auch als Nebenstromkanal, Mantelstromkanal oder Bypass-Kanal bezeichnet, leitet im Betrieb des Turbofantriebwerks 100 vom Fan 10 angesaugte Luft am Kerntriebwerk vorbei.

Die beschriebenen Komponenten besitzen eine gemeinsame Rotations- bzw. Maschinenachse 90. Die Rotationsachse 90 definiert eine axiale Richtung des Turbofantriebwerks. Eine radiale Richtung des Turbofantriebwerks verläuft senkrecht zur axialen Richtung.

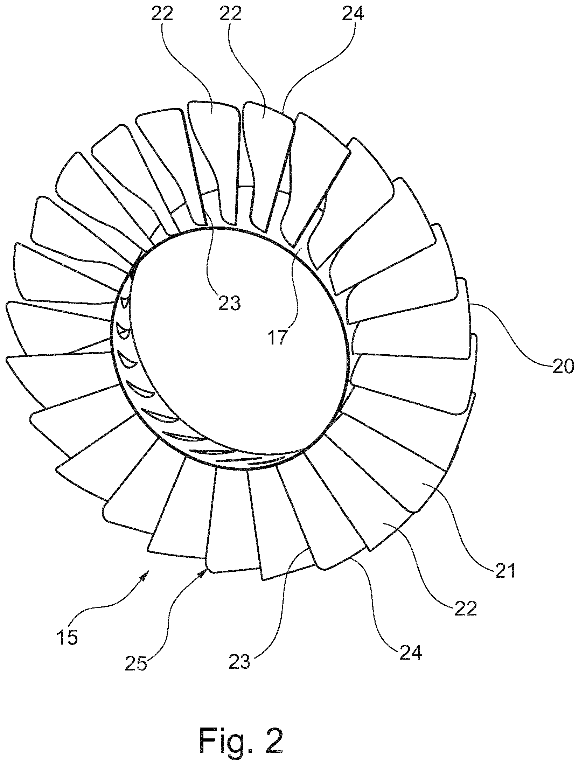

Die Figur 2 zeigt beispielhaft ein in BLISK-Bauweise ausgebildetes Laufrad, bei dem es sich beispielsweise um das Laufrad der ersten Stufe des Hochdruckverdichters 30 oder um das Laufrad der ersten Stufe des Mitteldruckverdichters 20 handelt. Die Prinzipien der vorliegenden Erfindung gelten jedoch in entsprechender Weise für beliebige Laufräder, insbesondere auch für einen in BLISK-Bauweise ausgebildeten Fan 10.

Das Laufrad 15 ist in der Figur 2 in einer perspektivischen Ansicht schräg von vorne dargestellt. Es weist eine Laufradnabe 17 auf, der den Strömungskanal durch das Laufrad 15 radial innen begrenzt. Weiter umfasst das Laufrad 15 einen Schaufelkranz 20, der eine Mehrzahl, im dargestellten Beispiel fünfundzwanzig in Umfangsrichtung angeordnete Laufschaufeln 21, 22 umfasst. Die einzelnen Laufschaufeln 21, 22 sind dabei in Umfangsrichtung äquidistant angeordnet, wobei dies nicht notwendigerweise der Fall ist. Das Laufrad 15 ist in BLISK-Bauweise ausgebildet, so dass die Laufradnabe 17 und Schaufelkranz 20 einstückig ausgebildet sind. Das Laufrad 15 kann des Weiteren eine Rotorscheibe (nicht dargestellt) umfassen. Jede Laufschaufel 21, 22 weist eine Schaufelvorderkante 23 und eine Schaufelspitze 24 auf. Die Schaufelspitze 24 verläuft im Wesentlichen gerade.

Die Laufschaufeln 21, 22 bilden zwei Gruppen, die sich baulich, d.h. in ihrer Geometrie unterscheiden. So bilden die Laufschaufeln 21 eine erste Gruppe von Laufschaufeln, die keine Materialaussparungen im Bereich der Schaufelvorderkante 23 aufweisen und die im Folgenden auch als nominale Laufschaufeln bezeichnet werden. Dabei laufen die Schaufelvorderkante 23 und die Schaufelspitze 24 spitz zusammen.

Weiter bilden die Laufschaufeln 22 eine zweite Gruppe von Laufschaufeln, die im Übergang von der Schaufelvorderkante 23 zur Schaufelspitze 24 jeweils - verglichen mit den Laufschaufeln 22 der ersten Gruppe - eine Materialaussparung 25 aufweisen. Dementsprechend weisen die Laufschaufeln 22 angrenzend an die Schaufelspitze 24 einen Rückschnitt auf. Ansonsten besitzen die Laufschaufeln 21 der ersten Gruppe und die Laufschaufeln der zweite Gruppe eine identische Geometrie. Aufgrund der Materialaussparung 25 weisen die Laufschaufeln 22 der zweiten Gruppe verglichen mit den Laufschaufeln 21 der ersten Gruppe weniger Material auf und sind dementsprechend leichter. Dies führt dazu, dass zumindest eine der Eigenfrequenzen der Laufschaufeln 22 der zweiten Gruppe gegenüber der entsprechenden Eigenfrequenz der Laufschaufeln 21 der ersten Gruppe ansteigt. Die Laufschaufeln 21, 22 der beiden Gruppen sind somit gegeneinander verstimmt. Die Abweichung in mindestens einer Eigenfrequenz zwischen Laufschaufeln 21, 22 liegt beispielsweise im Bereich zwischen 1 % und 3 % bezogen auf die Laufschaufel 21 der ersten Gruppe.

Des Weiteren ist vorgesehen, dass die Laufschaufeln 21, 22 in Umfangsrichtung eine nichtperiodische Abfolge bilden. Die fehlende Periodizität kann grundsätzlich auf vielfältige Weise realisiert werden. Eine fehlende Periodizität bedeutet dabei, dass die Abfolge der Laufschaufeln 21, 22 mindestens einen Symmetriebruch aufweisen muss. Dieser ist im dargestellten Ausführungsbeispiel dadurch gegeben, dass - bei ansonsten alternierender und damit symmetrischer Abfolge der Laufschaufeln 21, 22 - im in der Figur 2 oberen Bereich des Laufrads 15 zwei Laufschaufeln 22 der zweiten Gruppe unmittelbar nebeneinander angeordnet sind. Dieser Symmetriebruch ist bei dem dargestellten Laufrad dabei zwingend, da er eine ungerade Anzahl von Laufschaufeln umfasst. In entsprechender Weise könnte ein Symmetriebruch jedoch auch bei einem Laufrad mit einer geraden Anzahl von Laufschaufeln erfolgen.

Naturgemäß besteht eine große Anzahl von Möglichkeiten, wie mittels zwei Gruppen von Laufschaufeln 21, 22 nichtperiodische Abfolgen der Laufschaufeln der beiden Gruppen realisiert werden können, wobei die Anzahl dieser Möglichkeiten mit der Gesamtzahl der Laufschaufeln 21, 22 zunimmt. Die Auswahl einer für einen konkreten Anwendungsfall vorteilhaften nichtperiodischen Abfolge kann beispielsweise unter Einsatz eines Optimierungsverfahrens erfolgen. Ein geeignetes Optimierungsverfahren ist beispielsweise beschrieben in der Veröffentlichung F. Figaschewsky et al.: "DESIGN AND ANALYSIS OF AN INTENTIONAL MISTUNING EXPERIMENT REDUCING FLUTTER SUSCEPTIBILITY AND MINIMIZING FORCED RESPONSE OF A JET ENGINE FAN", Proceedings of ASME Turbo Expo 2017: Turbomachinery Technical Conference and Exposition GT 2017, June 26-30, 2017, Charlotte, USA.

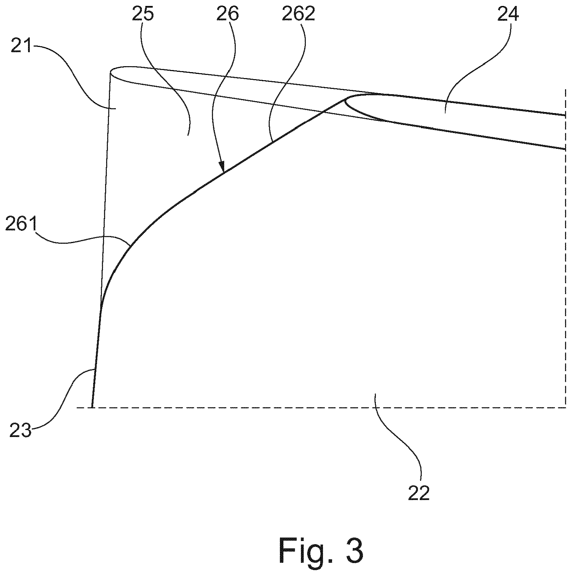

Die Figur 3 zeigt den Übergangsbereich zwischen der Schaufelvorderkante 23 und der Schaufelspitze 24 einer Laufschaufel 22 der zweiten Gruppe der Figur 2 in vergrößerter Darstellung. Danach bildet die Laufschaufel 22 in einem Übergangsbereich von der Schaufelvorderkante 23 zu Schaufelspitze 24 eine Materialaussparung 25 aus, die bei der ebenfalls dargestellten Laufschaufel 21 der ersten Gruppe mit Material gefüllt ist. Dementsprechend ist die Vorderkante 23 im Bereich der Materialaussparung 25 zurückgeschnitten, und die Vorderkante bildet dort einen schräg zur radialen Richtung verlaufenden Abschnitt 26 aus, der einen gekrümmten Übergangsbereich 261 zur eigentlichen Vorderkante 23 sowie einen sich an den gekrümmten Übergangsbereich 261 anschließenden, im Wesentlichen gradlinig verlaufenden Bereich 262 umfasst, der sich bis zur Schaufelspitze 24 erstreckt.

Die Laufschaufel 22 der zweiten Gruppe weist verglichen mit der Laufschaufel 21 der ersten Gruppe aufgrund der Materialaussparung 25 weniger Material und im Übergangsbereich von der Schaufelvorderkante 23 zur Schaufelspitze 24 eine andere Form bzw. Kontur als die Laufschaufel 21 auf, so dass die Laufschaufel 22 der zweiten Gruppe verglichen mit der Laufschaufel 21 der ersten Gruppe andere Eigenfrequenzen aufweist, d.h. unterschiedliche Werte der fundamentalen Schwingungsmoden. Die Laufschaufeln 21, 22 sind zueinander verstimmt.

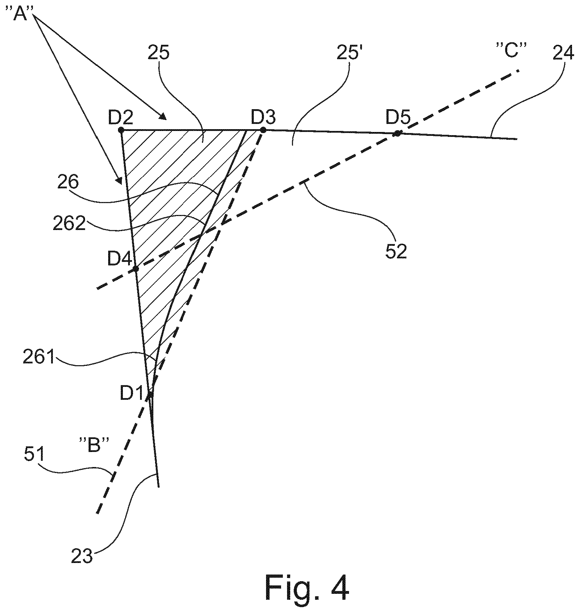

Die Figur 4 zeigt schematisch drei unterschiedliche Ausgestaltungen von Laufschaufeln im Übergangsbereich von der Schaufelvorderkante 23 zur Schaufelspitze 24. Die drei Ausgestaltungen korrespondieren mit drei unterschiedlichen Gruppen von Laufschaufeln, die das Laufrad bei diesem Ausführungsbeispiel besitzt, und werden nachfolgend mit A, B und C bezeichnet. Die Ausgestaltung A gibt den nominellen Zustand wieder, d.h. die Ausgestaltung, bei der die Laufschaufel keine Materialaussparung aufweist. Gemäß der Ausgestaltung A laufen die Vorderkante 23 und die Schaufelspitze 24 spitz in einem Punkt D2 (bzw. bei dreidimensionaler Betrachtung in einer Kante) zusammen. Die Ausgestaltung A stellt die Referenz für die weiteren dargestellten Ausgestaltungen dar.

Die Ausgestaltung B sieht eine Materialaussparung 25 im Übergang von der Schaufelvorderkante 23 zu Schaufelspitze 24 vor, die im Wesentlichen dem Dreieck mit den Eckpunkten D1, D2, D3 entspricht. Die exakte Form der Schaufelvorderkante 26 im Bereich der Aussparung 25 entspricht der in Bezug auf die Figur 3 beschriebenen Form. Dementsprechend umfasst die Vorderkante im Bereich der Aussparung 25 einen gekrümmten Übergangsbereich 261 und einen gradlinig verlaufenden Bereich 262. Die in der dargestellten Seitenansicht ausgesparte bzw. ausgeschnittene Fläche wird durch den Schnittpunkt der Geraden 51 mit der Vorderkante 23 und der Schaufelspitze 24 definiert. Die Gerade 51 verläuft dabei im parallel zu dem gradlinig verlaufende Bereich 262 und ist zu diesem geringfügig versetzt, um die Fläche im Übergangsbereich 261 zusätzlich zu berücksichtigen.

Die Ausgestaltung C wird durch die Gerade 52 definiert, deren Verlauf im Wesentlichen dem Verlauf der Vorderkante bei dieser Ausgestaltung entspricht, wobei genau genommen wiederum ein Übergangsbereich und ein im Wesentlichen gradlinig verlaufender Bereich vorgesehen sind (nicht dargestellt). Die ausgeschnittene Fläche ist im Wesentlichen die gleiche wie bei der Ausgestaltung B, wobei dies nicht notwendigerweise der Fall ist. Die Materialaussparung 25' bei der Ausgestaltung C wird durch das Dreieck mit den Eckpunkten D4, D2, D5 definiert.

Bei der Ausgestaltung B verläuft die Vorderkante im Bereich der Materialaussparung 25 bezogen auf die radiale Richtung deutlich steiler als bei der Ausgestaltung C im Bereich der Materialaussparung 25'. Bei beiden Ausgestaltungen B, C weisen die Materialaussparungen 25, 25' näherungsweise in der Seitenansicht die Form eines Dreiecks auf, wobei die längste Seite des Dreiecks die Vorderkante der Schaufel im Bereich der Materialaussparung von 20, 25' bildet.

Die Figur 4 zeigt somit schematisch Laufschaufeln A, B, C eines Laufrads, die drei unterschiedliche bauliche Gruppen bilden. Zwei dieser Gruppen weisen Materialaussparungen 25, 25' im Übergang von der Schaufelvorderkante 23 zur Schaufelspitze 24 auf, wobei die Materialaussparungen sich in ihrer Form bzw. Ausrichtung unterscheiden und dementsprechend die Kontur der Schaufeln sich im Bereich der Materialaussparungen 25, 25' unterscheidet.

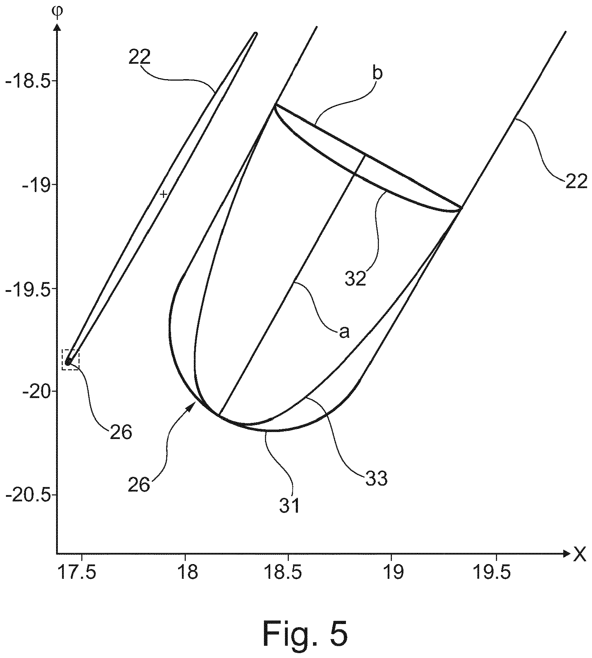

Die Figur 5 zeigt den Ansatz, dass die Laufschaufeln im Bereich der Materialaussparungen eine Vorderkantenform bzw. ein Vorderkantenprofil aufweisen, das sich von der sonstigen Vorderkantenform unterscheidet. Dabei zeigt die Figur 5 im linken Bereich als Übersichtsdarstellung einen Profilschnitt durch eine Laufschaufel 22. Der Profilschnitt erfolgt in einer radialen Höhe, in der im Übergang von der Schaufelvorderkante zur Schaufelspitze eine Materialaussparung realisiert ist, so das in der dargestellten Schnittdarstellung die Vorderkante 26 im Bereich der Materialaussparung dargestellt ist.

Die Figur 5 zeigt drei mögliche unterschiedliche Formen bzw. Profile der Vorderkante im Bereich der Materialaussparung. Gemäß einer ersten Variante ist die Vorderkante 31 im Bereich der Materialaussparung halbkreisförmig ausgebildet. Gemäß einer zweiten Variante ist die Vorderkante 32 im Bereich der Materialaussparung stumpf ausgebildet, d.h. sie bildet im Wesentlichen eine Prallfläche für die einströmende Luft. Gemäß einer erfindungsgemäßen Ausführung ist die Vorderkante 33 im Bereich der Materialaussparung elliptisch ausgebildet, wobei die Form der Ellipse durch das Verhältnis von großer Hauptachse a zu kleiner Halbachse b festgelegt ist. Dabei ist die Vorderkante in allen drei Varianten im Bereich außerhalb der Materialaussparung beispielsweise elliptisch ausgebildet.

Es wird darauf hingewiesen, dass die unterschiedlichen Formen 31, 32, 33 der Vorderkante im Bereich einer Materialaussparung nicht notwendigerweise alle in einem konkreten Laufrad realisiert sind. So kann in ersten Ausführungsbeispielen vorgesehen sein, dass die Gruppen von Laufschaufeln, die Materialaussparungen aufweisen, alle die gleiche Form der Vorderkante aufweisen, also zumindest die Form 33. In zweiten Ausführungsbeispielen kann vorgesehen sein, dass unterschiedliche Gruppen von Laufschaufeln, die Materialaussparungen aufweisen, auch unterschiedliche Formen der Vorderkante realisieren, beispielsweise dass eine erste Gruppe von Laufschaufeln, die Materialaussparungen aufweist, die Form 31 und eine zweite Gruppe von Laufschaufeln, die Materialaussparungen aufweist, die Form 33 ausbildet.

Eine weitere Ausgestaltung sieht vor, dass sich die Form der Vorderkante in radialer Richtung im Bereich einer Materialaussparung ändert, dass beispielsweise die elliptische Form 33 in Richtung zur Schaufelspitze 24 eine zunehmend flachere Form annimmt, wobei flacher bedeutet, dass das Verhältnis von großer Hauptachse a zu kleiner Halbachse b größer wird.

Auch kann vorgesehen sein, dass die Vorderkantenform in Abhängigkeit von der Steilheit des Rückschnitts der Vorderkante im Bereich der Materialaussparung gewählt wird, wobei beispielsweise vorgesehen sein kann, dass eine geringere Steilheit der Vorderkante im Bereich der Materialaussparung mit einer flacheren Vorderkantenform einhergeht.

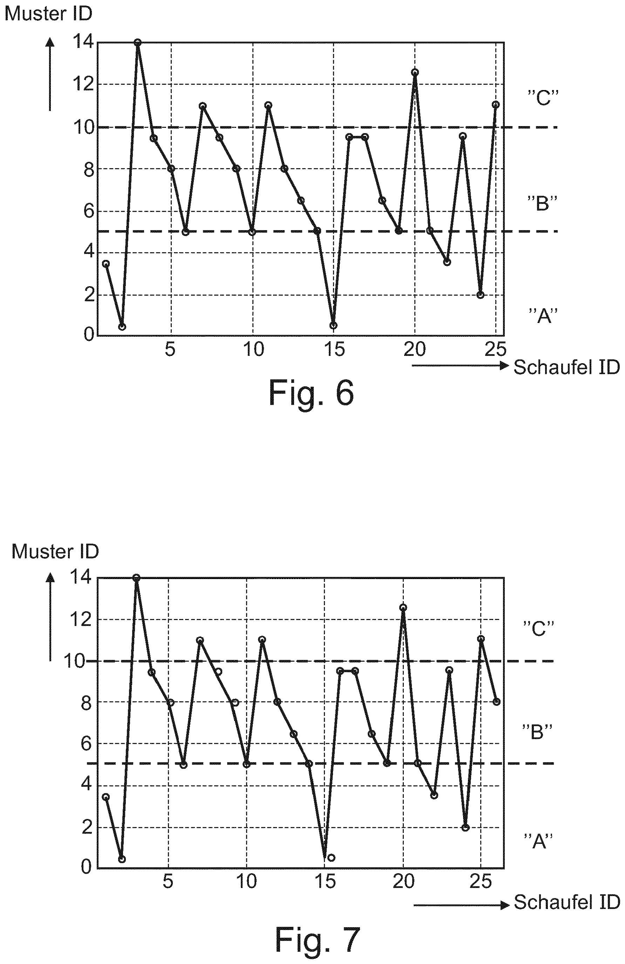

Die Figur 6 bezieht sich auf ein Laufrad, das 25 Schaufeln aufweist, die 14 unterschiedliche Bauformen bzw. Gruppen von Laufschaufeln bilden. Es ist also eine hohe Anzahl von Gruppen von Laufschaufeln realisiert. Das Diagramm der Figur 6 gibt für jede Schaufel das zugehörige Verstimmungsmuster, das einer bestimmten Bauform entspricht, an.

Die Anfertigung eines solchen Laufrads ist aufwendig, da eine Vielzahl unterschiedlicher Bauformen realisiert werden müssen. Aus Fertigungsgesichtspunkten kann es vorteilhaft sein, statt feinteiliger Variationen der Schaufelblattgeometrie die Anzahl der unterschiedlichen Schaufeln zu reduzieren, z.B. für nur drei unterschiedliche Schaufelformen. Die Ableitung der Verteilung der drei unterschiedlichen Schaufelblattgeometrien (A, B, C) erfolgt z.B. durch eine diskrete Optimierung oder durch Reduktion der existierenden Variationen anhand der eingestellten Frequenzvariation. Die Figur 6 verdeutlicht eine mögliche Abbildung der verschiedenen Verstimmungsmuster bzw. Bauformen auf drei Bestimmungsmuster A, B, C.

Die Figur 7 entspricht der Figur 6, wobei sie sich auf ein Laufrad mit einer geraden Anzahl von Schaufeln bezieht, das 26 Schaufeln umfasst, die 14 unterschiedliche Bauformen bzw. Gruppen von Laufschaufeln bilden. Auch hier kann es aus Fertigungsgesichtspunkten vorteilhaft sein, eine Reduktion der unterschiedlichen Schaufeln auf drei Schaufeln A, B, C vorzunehmen.

Die vorliegende Erfindung beschränkt sich in ihrer Ausgestaltung nicht auf die vorstehend beschriebenen Ausführungsbeispiele. Insbesondere ist die Form der in den Figuren beschriebenen Materialaussparung und die sich daraus ergebende Kontur der Vorderkanten der Laufschaufeln nur beispielhaft zu verstehen. Auch wird darauf hingewiesen, dass die Erfindung zwar anhand eines Laufrads eines Turbofan-Triebwerks beschrieben wurden, die Prinzipien der vorliegenden Erfindung jedoch in gleicher Weise für jedes anderen Laufrad einer Strömungsmaschine gelten.

Des Weiteren wird darauf hingewiesen, dass die Merkmale der einzelnen beschriebenen Ausführungsbeispiele der Erfindung in verschiedenen Kombinationen miteinander kombiniert werden können. Der Schutzbereich der Erfindung ist jedoch durch die nachfolgenden Ansprüche bestimmt.

## Patentansprüche

1. Laufrad (15) einer Strömungsmaschine, das aufweist:
- eine Mehrzahl von Laufschaufeln (21, 22; A, B, C), die jeweils eine Schaufelvorderkante (23) und eine Schaufelspitze (24) aufweisen,
- wobei die Laufschaufeln (21, 22; A, B, C) eine erste Gruppe und mindestens eine weitere Gruppe von Laufschaufeln bilden, die baulich unterschiedlich sind, wobei
- die Laufschaufeln (21; A) der ersten Gruppe nominale Laufschaufeln sind,
- die Laufschaufeln (22; B, C) der mindestens einen weiteren Gruppe jeweils eine Materialaussparung (25, 25') im Übergang von der Schaufelvorderkante (23) zur Schaufelspitze (24) aufweisen, die bei den Laufschaufeln (21; A) der ersten Gruppe nicht vorhanden ist, und
- die Laufschaufeln (21, 22; A, B, C) der ersten Gruppe und der mindestens einen weiteren Gruppe in Umfangsrichtung eine nichtperiodische Abfolge bilden,
wobei
bei mindestens einer Gruppe von Laufschaufeln (22; B, C) mit Materialaussparungen im Profilschnitt die Form der Vorderkante (26) im Bereich der Materialaussparung (25, 25') abweicht von der Form der Vorderkante (23) außerhalb der Materialaussparung, **dadurch gekennzeichnet, dass**
die Vorderkante (33) im Bereich der Materialaussparung (25, 25') und im Bereich außerhalb der Materialaussparung im Profilschnitt elliptisch ausgebildet ist, wobei das Verhältnis von Hauptachse (a) zu Nebenachse (b) im Bereich der Materialaussparung (25, 25') größer ist als im Bereich außerhalb der Materialaussparung.

2. Laufrad nach Anspruch 1, **dadurch gekennzeichnet, dass** die Laufschaufeln (21, 22) zwei Gruppen bilden, die baulich unterschiedlich sind, wobei die Laufschaufeln (21) der ersten Gruppe nominale Laufschaufeln sind, die keine Materialaussparungen im Übergang von der Schaufelvorderkante (23) zur Schaufelspitze (24) aufweisen, und die Laufschaufeln (22) der zweiten Gruppe Laufschaufeln sind, die Materialaussparungen (25) im Übergang von der Schaufelvorderkante (23) zur Schaufelspitze (24) aufweisen.

3. Laufrad nach Anspruch 1,
**dadurch gekennzeichnet, dass** die Laufschaufeln (A, B, C) n Gruppen bilden, n ≥ 3, die baulich unterschiedlich sind, wobei die Laufschaufeln (A) der ersten Gruppe nominale Laufschaufeln sind, die keine Materialaussparungen im Übergang von der Schaufelvorderkante (23) zur Schaufelspitze (24) aufweisen, und die Laufschaufeln (B, C) jeder weiteren Gruppe Laufschaufeln sind, die Materialaussparungen (25, 25') im Übergang von der Schaufelvorderkante (23) zur Schaufelspitze (24) aufweisen, wobei Form und/oder Ausmaß der Materialaussparung der Laufschaufeln bei jeder der weiteren Gruppen unterschiedlich ist.

4. Laufrad nach Anspruch 3, **dadurch gekennzeichnet, dass** die Gruppen von Laufschaufeln (A, B, C) mit Materialaussparungen sich dadurch unterscheiden, dass die jeweiligen Laufschaufeln (A, B, C) bezogen auf die radiale Richtung einen unterschiedlich steilen Verlauf der Vorderkante (26) im Bereich der Materialaussparung (25, 25') aufweisen.

5. Laufrad nach Anspruch 4, **dadurch gekennzeichnet, dass** die Laufschaufeln (A, B, C) drei Gruppen bilden, die baulich unterschiedlich sind, wobei die Laufschaufeln (A) der ersten Gruppe nominale Laufschaufeln sind und die Laufschaufeln (B, C) der zweiten und dritten Gruppe Laufschaufeln sind, die Materialaussparungen (25, 25') im Übergang von der Schaufelvorderkante (23) zur Schaufelspitze (24) aufweisen, wobei die Materialaussparungen (25, 25') bei den Laufschaufeln (B) der zweiten Gruppe bezogen auf die radiale Richtung zu einem steileren Verlauf der Vorderkante (26) führen als bei den Laufschaufeln (C) der dritten Gruppe.

6. Laufrad nach Anspruch 4, **dadurch gekennzeichnet, dass** bei zwei betrachteten Gruppen von Laufschaufeln (B, C) mit Materialaussparungen (25, 25') gilt, dass bei der Gruppe, die eine geringere Steilheit des Verlaufs der Vorderkante (26) im Bereich der Materialaussparung aufweist, eine im Profilschnitt flachere Vorderkantenform ausgebildet ist.

7. Laufrad nach einem der vorangehenden Ansprüche, **dadurch gekennzeichnet, dass** bei mindestens einer Gruppe von Laufschaufeln (22; B, C) mit Materialaussparungen die Form der Vorderkante (26) im Bereich der Materialaussparung (25, 25') mit zunehmender radialer Höhe zunehmend flacher wird.

8. Laufrad nach einem der vorangehenden Ansprüche, **dadurch gekennzeichnet, dass** das Laufrad (15) eine ungerade Anzahl von Laufschaufeln aufweist, wobei die nichtperiodische Abfolge der Laufschaufeln durch eine quasiperiodische Abfolge gebildet wird, die bis auf einen Symmetriebruch periodisch ist.

9. Laufrad nach einem der Ansprüche 1 oder 2,
**dadurch gekennzeichnet, dass** das Laufrad (15) zwei Gruppen von Laufschaufeln (21, 22) und eine gerade Anzahl von Laufschaufeln aufweist, wobei die nichtperiodische Abfolge der Laufschaufeln durch mindestens eine Abweichung von einer alternierenden Reihenfolge gebildet wird.

10. Laufrad nach einem der vorangehenden Ansprüche, **dadurch gekennzeichnet, dass** das Laufrad ein in BLISK-Bauweise ausgebildeter Fan ist.

11. Laufrad nach einem der vorangehenden Ansprüche, **dadurch gekennzeichnet, dass** das Laufrad (15) ein in BLISK-Bauweise ausgebildetes Laufrad einer Verdichtereingangsstufe eines Verdichters ist.

## Claims

1. Rotor (15) of a turbomachine, which has:
- a plurality of rotor blades (21, 22; A, B, C), which each have a blade leading edge (23) and a blade tip (24),
- the rotor blades (21, 22; A, B, C) forming a first group and at least one further group of rotor blades of different construction,
- the rotor blades (21; A) of the first group being nominal rotor blades,
- the rotor blades (22; B, C) of the at least one further group each having a material cutout (25, 25') in the transition from the blade leading edge (23) to the blade tip (24), said material cutout not being present in the case of the rotor blades (21; A) of the first group, and
- the rotor blades (21, 22; A, B, C) of the first group and of the at least one further group forming a non-periodic sequence in the circumferential direction,
wherein, in the case of at least one group of rotor blades (22; B, C) with material cutouts in the profile section, the shape of the leading edge (26) in the region of the material cutout (25, 25') deviates from the shape of the leading edge (23) outside the material cutout, **characterized in that** the leading edge (33) has an elliptical form in the region of the material cutout (25, 25') and in the region outside the material cutout in the profile section, the ratio of major axis (a) to minor axis (b) being greater in the region of the material cutout (25, 25') than in the region outside the material cutout.

2. Rotor according to Claim 1, **characterized in that** the rotor blades (21, 22) form two groups of different construction, the rotor blades (21) of the first group being nominal rotor blades which do not have any material cutouts in the transition from the blade leading edge (23) to the blade tip (24), and the rotor blades (22) of the second group being rotor blades which have material cutouts (25) in the transition from the blade leading edge (23) to the blade tip (24).

3. Rotor according to Claim 1, **characterized in that** the rotor blades (A, B, C) form n groups, n ≥ 3, of different construction, the rotor blades (A) of the first group being nominal rotor blades which do not have any material cutouts in the transition from the blade leading edge (23) to the blade tip (24), and the rotor blades (B, C) of each further group being rotor blades which have material cutouts (25, 25') in the transition from the blade leading edge (23) to the blade tip (24), the shape and/or dimension of the material cutout of the rotor blades being different in the case of each of the further groups.

4. Rotor according to Claim 3, **characterized in that** the groups of rotor blades (A, B, C) with material cutouts differ by virtue of the fact that the respective rotor blades (A, B, C), with respect to the radial direction, have a differently steep profile of the leading edge (26) in the region of the material cutout (25, 25').

5. Rotor according to Claim 4, **characterized in that** the rotor blades (A, B, C) form three groups of different construction, the rotor blades (A) of the first group being nominal rotor blades and the rotor blades (B, C) of the second and third group being rotor blades which have material cutouts (25, 25') in the transition from the blade leading edge (23) to the blade tip (24), the material cutouts (25, 25'), with respect to the radial direction, leading to a steeper profile of the leading edge (26) in the case of the rotor blades (B) of the second group than in the case of the rotor blades (C) of the third group.

6. Rotor according to Claim 4, **characterized in that,** in the case of two considered groups of rotor blades (B, C) with material cutouts (25, 25'), it holds true that a leading edge shape that is flatter in the profile section is formed in the case of the group which has a lesser steepness of the profile of the leading edge (26) in the region of the material cutout.

7. Rotor according to one of the preceding claims, **characterized in that,** in the case of at least one group of rotor blades (22; B, C) with material cutouts, the shape of the leading edge (26) becomes increasingly flatter with an increasing radial height in the region of the material cutout (25, 25').

8. Rotor according to one of the preceding claims, **characterized in that** the rotor (15) has an uneven number of rotor blades, the non-periodic sequence of the rotor blades being formed by a quasi-periodic sequence which is periodic apart from a break in symmetry.

9. Rotor according to either of Claims 1 and 2, **characterized in that** the rotor (15) has two groups of rotor blades (21, 22) and an even number of rotor blades, the non-periodic sequence of the rotor blades being formed by at least one deviation from an alternating sequence.

10. Rotor according to one of the preceding claims, **characterized in that** the rotor is a fan formed with a BLISK design.

11. Rotor according to one of the preceding claims, **characterized in that** the rotor (15) is a rotor of a compressor input stage of a compressor which is formed with a BLISK design.

## Revendications

1. Roue à aubes (15) d'une turbomachine, présentant :
- une pluralité d'aubes mobiles (21, 22 ; A, B, C) qui présentent respectivement un bord d'attaque d'aube (23) et une pointe d'aube (24),
- les aubes mobiles (21, 22 ; A, B, C) constituant un premier groupe et au moins un autre groupe d'aubes mobiles de construction différente, dans laquelle
- les aubes mobiles (21; A) du premier groupe sont des aubes mobiles nominales,
- les aubes mobiles (22 ; B, C) du au moins un autre groupe présentent respectivement un enlèvement de matière (25, 25') à la transition du bord d'attaque d'aube (23) à la pointe d'aube (24) qui n'existe pas sur les aubes mobiles (21 ; A) du premier groupe, et
- les aubes mobiles (21, 22 ; A, B, C) du premier groupe et du au moins un autre groupe constituent dans la direction circonférentielle une séquence non périodique,
dans laquelle, pour au moins un groupe d'aubes mobiles (22 ; B, C) avec des enlèvements de matière, en section droite, la forme du bord d'attaque (26) est dans la zone de l'enlèvement de matière (25, 25') différente de la forme du bord d'attaque (23) en dehors de l'enlèvement de matière,
**caractérisée en ce que** le bord d'attaque (33) est réalisé de manière elliptique en section droite dans la zone de l'enlèvement de matière (25, 25') et dans la zone en dehors de l'enlèvement de matière, le rapport entre l'axe principal (a) et l'axe secondaire (b) dans la zone de l'enlèvement de matière (25, 25') étant supérieur à celui dans la zone en dehors de l'enlèvement de matière.

2. Roue à aubes selon la revendication 1, **caractérisée en ce que** les aubes mobiles (21, 22) constituent deux groupes de construction différente, les aubes mobiles (21) du premier groupe étant des aubes mobiles nominales qui ne présentent aucun enlèvement de matière à la transition du bord d'attaque d'aube (23) à la pointe d'aube (24), et les aubes mobiles (22) du deuxième groupe étant des aubes mobiles qui présentent des enlèvements de matière (25) à la transition du bord d'attaque d'aube (23) à la pointe d'aube (24).

3. Roue à aubes selon la revendication 1, **caractérisée en ce que** les aubes mobiles (A, B, C) constituent n groupes, n ≥ 3, qui sont de construction différente, les aubes mobiles (A) du premier groupe étant des aubes mobiles nominales qui ne présentent aucun enlèvement de matière à la transition du bord d'attaque d'aube (23) à la pointe d'aube (24), et les aubes mobiles (B, C) de chaque autre groupe étant des aubes mobiles qui présentent les enlèvements de matière (25, 25') à la transition du bord d'attaque d'aube (23) à la pointe d'aube (24), la forme et/ou la dimension de l'enlèvement de matière des aubes mobiles étant différentes pour chacun des autres groupes.

4. Roue à aubes selon la revendication 3, **caractérisée en ce que** les groupes d'aubes mobiles (A, B, C) avec des enlèvements de matière se distinguent **en ce que** les aubes mobiles (A, B, C) respectives présentent par rapport à la direction radiale un tracé de pente différent du bord d'attaque (26) dans la zone de l'enlèvement de matière (25, 25').

5. Roue à aubes selon la revendication 4, **caractérisée en ce que** les aubes mobiles (A, B, C) constituent trois groupes qui sont de construction différente, les aubes mobiles (A) du premier groupe étant des aubes mobiles nominales, et les aubes mobiles (B, C) du deuxième et du troisième groupe étant des aubes mobiles qui présentent les enlèvements de matière (25, 25') à la transition du bord d'attaque d'aube (23) à la pointe d'aube (24), les enlèvements de matière (25, 25') sur les aubes mobiles (B) du deuxième groupe aboutissant par rapport à la direction radiale à un tracé plus pentu du bord d'attaque (26) que pour les aubes mobiles (C) du troisième groupe.

6. Roue à aubes selon la revendication 4, **caractérisée en ce que** pour deux groupes d'aubes mobiles (B, C) avec enlèvements de matière (25, 25') examinés, il est vrai qu'une forme de bord d'attaque plus plate en section droite est réalisée pour le groupe qui présente une pente inférieure du tracé du bord d'attaque (26) dans la zone de l'enlèvement de matière.

7. Roue à aubes selon l'une quelconque des revendications précédentes, **caractérisée en ce que** pour au moins un groupe d'aubes mobiles (22 ; B, C) avec des enlèvements de matière, la forme du bord d'attaque (26) dans la zone de l'enlèvement de matière (25, 25') est de plus en plus plate à mesure que la hauteur radiale augmente.

8. Roue à aubes selon l'une quelconque des revendications précédentes, **caractérisée en ce que** la roue à aubes (15) présente un nombre impair d'aubes mobiles, la séquence non périodique des aubes mobiles étant formée par une séquence quasi-périodique qui est périodique à l'exception d'une rupture de symétrie.

9. Roue à aubes selon l'une quelconque des revendications 1 ou 2, **caractérisée en ce que** la roue à aubes (15) présente deux groupes d'aubes mobiles (21, 22) et un nombre pair d'aubes mobiles, la séquence non périodique des aubes mobiles étant formée par au moins un écart par rapport à une séquence en alternance.

10. Roue à aubes selon l'une quelconque des revendications précédentes, **caractérisée en ce que** la roue à aubes est un ventilateur de type disque d'aubage monobloc.

11. Roue à aubes selon l'une quelconque des revendications précédentes, **caractérisée en ce que** la roue à aubes (15) est une roue à aubes réalisée à la manière d'un disque d'aubage monobloc d'un étage d'entrée de compresseur d'un compresseur.
